## Europäisches Patentamt

## European Patent Office

## Office européen des brevets

(19)

(11) Numéro de publication: **0 032 863**
**B1**

(12)

# FASCICULE DE BREVET EUROPEEN

(45) Date de publication du fascicule du brevet:
**10.04.85**

(51) Int. Cl.⁴: **G 06 F 13/00**

(21) Numéro de dépôt: **81400062.6**

(22) Date de dépôt: **19.01.81**

---

(54) Procédé et dispositif pour gérer les conflits posés par des accès multiples à un même cache d'un système de traitement numérique de l'information comprenant au moins deux processeurs possédant chacun un cache.

---

(30) Priorité: **22.01.80 FR 8001351**

(43) Date de publication de la demande:
**29.07.81 Bulletin 81/30**

(45) Mention de la délivrance du brevet:
**10.04.85 Bulletin 85/15**

(84) Etats contractants désignés:
**AT DE FR IT**

(56) Documents cités:
**EP - A - 0 009 938
GB - A - 2 037 039
US - A - 3 588 829
US - A - 3 771 137**

**IBM TECHNICAL DISCLOSURE BULLETIN, vol. 14, no. 10, mars 1972, New York, US R.S. CAPOWSKI et al.: "Multiprocessing storage priority network", pages 3141-3142**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Bacot, Pierre Charles Augustin, CII HONEYWELL BULL 94 avenue Gambetta, F-75020 Paris (FR)**
Inventeur: **Isert, Michel, CII HONEYWELL BULL 94 avenue Gambetta, F-75020 Paris (FR)**

(74) Mandataire: **Doireau, Marc, CII-Honeywell Bull Division Propriété Industrielle 94, avenue Gambetta Boîte Postale 33, F-75960 Paris cedex 20 (FR)**

---

**Description**

La présente invention concerne généralement et a essentiellement pour objet un procédé et un dispositif pour gérer les conflits posés par des accès multiples à un même cache d'un système de traitement numérique de l'information comprenant au moins deux processeurs possédant chacun un cache, tout en favorisant ces accès multiples afin d'autoriser le traitement simultané d'au moins deux tâches exécutées par deux processeurs du système respectivement, dès l'instant où l'exécution de ces tâches font appel au même cache d'un processeur.

A l'heure actuelle, des caches ou mémoires de faible capacité à accès rapide sont incorporés dans les systèmes de traitement de l'information pour diminuer les temps de transfert des données. Cependant, les systèmes multiprocesseurs ne comprennent qu'un seul cache par unité de mémoire principale. Comme pour les mémoires, il se pose le problème des accès multiples à un même cache.

Ce problème est généralement résolu par des files d'attente gérées par des circuits de priorité par exemple. Dans tous les cas, ces temps d'attente se répercutent sur les temps de traitement sans autoriser des accès multiples à un même cache.

Selon une autre conception utilisée par la demanderesse, l'utilisation des caches a été décentralisée au-delà des unités de mémoire principale, en associant un cache à chaque processeur du système. Cette conception est mentionnée dans un article intitulé «Performance results for an m.i.m.d. computer organisation using pipelined binary switches and cache memories» paru dans la revue anglaise «PROC. IEE», vol. 125, N° 11, novembre 1978.

Cependant, cet article ne pose pas et ne resout pas le problème de la cohérence des informations enregistrées dans les différents caches et dans la ou les unités de mémoire principale du système, problème qui, par contre, a été posé et résolu par la demanderesse selon une stratégie décrite dans sa demande de brevet français N° 7 820 206 du 6 juillet 1978.

Ce problème de la cohérence des informations ne résout pas pour autant le problème posé par des accès multiples à un cache d'un même processeur, et c'est justement l'objet de l'invention que de gérer ces accès multiples dans le but d'éviter des conflits, tout en favorisant ces accès multiples afin d'augmenter la rapidité des traitements simultanés de plusieurs tâches exécutées par plusieurs processeurs respectivement.

Lorsqu'un processeur d'un système de traitement numérique de l'information traite une tâche, il est amené à dialoguer notamment avec l'ensemble mémoire du système comprenant au moins une unité de mémoire principale et les ressources propres du processeur telles que son cache. Ce dialogue donne lieu à l'émission par le processeur de requêtes demandant l'accès à des informations contenues dans l'ensemble mémoire du système. Le traitement de ces requêtes fait appel en priorité aux ressources propres du processeur, et éventuellement ensuite au reste du système par l'intermédiaire du bus principal de liaison reliant les différentes unités du système.

Lorsque le système comprend au moins un second processeur, celui-ci est également amené à émettre des requêtes pour accéder à des informations au cours du traitement d'une tâche. Tant que les deux processeurs du système font appel à leurs propres ressources, il n'y a pas de conflit entre les traitements des tâches exécutées par ces processeurs.

Cependant, au cours du traitement d'une requête, le processeur émetteur de cette requête peut être amené à demander l'accès à une information non contenue dans son propre cache. Il fait donc appel au reste du système, par l'intermédiaire du bus de liaison, pour accéder à une information contenue soit dans l'unité de mémoire principale, soit dans le cache du second processeur du système ou plus généralement dans un autre cache d'un processeur du système par exemple, lorsque l'information recherchée a été modifiée dans ledit cache, sans que son image en mémoire principale ait été déjà modifiée, selon la stratégie décrite dans le demande de brevet précitée. Cet autre cache peut être lui-même en cours de traitement d'une requête dénommée interne si elle est émise par le processeur associé à ce cache, lorsqu'il reçoit une demande d'accès aux informations qu'il détient, demande issue d'un processeur voisin et qu'il considère comme une requête dénommée externe dès l'instant où cette requête n'est pas émise par son processeur associé.

Le brevet antérieur US n° 3 771 137 concerne un système de mémoire dans un environnement multiprocesseurs où chaque processeur est associé à un cache. Ce brevet a pour objet de résoudre le problème de la mise à jour ou de la cohérence des informations enregistrées dans les différents caches et dans le mémoire centrale du système. Des requêtes internes du processeur et des requêtes externes d'un autre processeur peuvent être traitées simultanèment tant que ces requêtes s'adressent à des ressources différentes.

Le brevet antérieur US n° 3 588 829 a essentiellement pour objet d'accélérer le processus de transfert de données entre une mémoire centrale et un processeur par l'intermédiaire d'un cache. Des requêtes internes par le processeur (CPE) et des requêtes d'écriture externes par les canaux peuvent être traitées simultanément.

L'invention ne vise pas à assurer une exécution simultanée de deux requêtes, mais pose et résout concrètement le problème posé par des accès multiples à un même cache en fonction de la nature de ces requêtes (lecture ou écriture) tout en favorisant une exécution simultanée, au niveau de l'un des caches du système, d'une requête interne émise par le processeur associé au cache et le traitement d'une requête externe émanant d'un autre processeur du système.

A cet effet, l'invention propose donc un procédé pour gérer les conflits posés par des accès multiples à un même cache d'un système de traitement numérique de l'information comprenant au moins: une unité de mémoire principale, deux processeurs possédant chacun des ressources propres telles qu'un cache avec une partie mémoire et une partie répertoire d'identification des informations contenues dans ladite partie mémoire, une unité d'entrée-sortie, un bus principal de liaison reliant ces différents éléments du système; le traitement d'une tâche par un processeur consistant:

– à émettre au moins une requête pour accéder à au moins une information présente soit dans le cache du processeur ou d'un autre processeur, soit dans l'unité de mémoire du système,

– à faire valider cette requête par son cache qui considère cette requête comme interne, et

– à faire exécuter ensuite cette requête interne par ledit cache; ce cache pouvant recevoir une requête dénommée externe émise par un autre processeur du système traitant une autre tâche et demandant l'accès par l'intermédiaire du bus de liaison, le procédé est du type consistant à traiter une succession d'opérations de lecture et d'écriture au cours d'une succession de cycles, lancés à l'apparition d'une requête interne validée ou d'une requête externe validée, en donnant priorité à la validation d'une requête externe sur une requête interne lorsque ces requêtes demandent à être prises en compte simultanément par un même cache dans un premier cycle, et en autorisant le traitement simultané de ces requêtes au cours des cycles suivants si elles font appel à des ressources différentes du cache du processeur, caractérisé en ce qu'il consiste:

– à lancer une séquence de cycles pour chaque requête interne validée et une séquence de cycles pour chaque requête externe validée,

– à retarder le premier cycle d'une requête interne de lecture, si une requête externe travaille sur la partie répertoire ou la partie mémoire du cache du processeur,

– à retarder le premier cycle d'une requête interne d'écriture, si une requête externe travaille déjà sur la partie mémoire ou la partie répertoire du cache du processeur, ou va travailler sur la partie mémoire ou la partie répertoire du cache dans le cycle de traitement suivant,

– à retarder le premier cycle d'une nouvelle requête externe ou à interrompre au début d'un cycle l'opération de traitement d'une requête externe d'écriture, si la nature de l'opération demandée alors par le traitement d'une requête interne en cours est une opération de transfert de données sur le bus de liaison entre le cache du processeur émetteur de la requête interne et l'unité de mémoire principale du système.

Selon un avantage important de l'invention, le fait d'autoriser au maximum le recouvrement entre le traitement par un même cache d'une requête interne et d'une requête externe permet non seulement d'augmenter la rapidité de traitement des tâches exécutées par un processeur, mais encore de permettre une utilisation optimum du bus de liaison améliorant d'autant les performances du système.

L'invention est exposée ci-après plus en détail à l'aide de dessins représentant seulement un mode d'exécution, où;

– la fig. 1 représente de façon schématique un système de traitement numérique de l'information auquel s'applique le procédé conforme à l'invention;

– la fig. 2 représente de façon schématique les circuits associés à un cache pour permettre l'exécution du procédé conforme à l'invention;

– la fig. 3 représente différents signaux schématisant le traitement d'une requête interne dans le cas d'une lecture d'une information contenue dans le cache du processeur émetteur de la requête interne;

– la fig. 4 représente différents signaux schématisant le traitement d'une requête interne dans le cas d'une écriture d'une information contenue dans le cache du processeur émetteur de la requête interne;

– la fig. 5 représente différents signaux schématisant le traitement d'une requête interne dans le cas d'une lecture d'une information non contenue dans le cache du processeur émetteur de la requête interne;

– la fig. 6 représente différents signaux schématisant le traitement d'une requête externe dans le cas d'une lecture d'une information;

– la fig. 7 représente différents signaux schématisant le traitement d'une requête externe dans le cas d'une écriture d'une information.

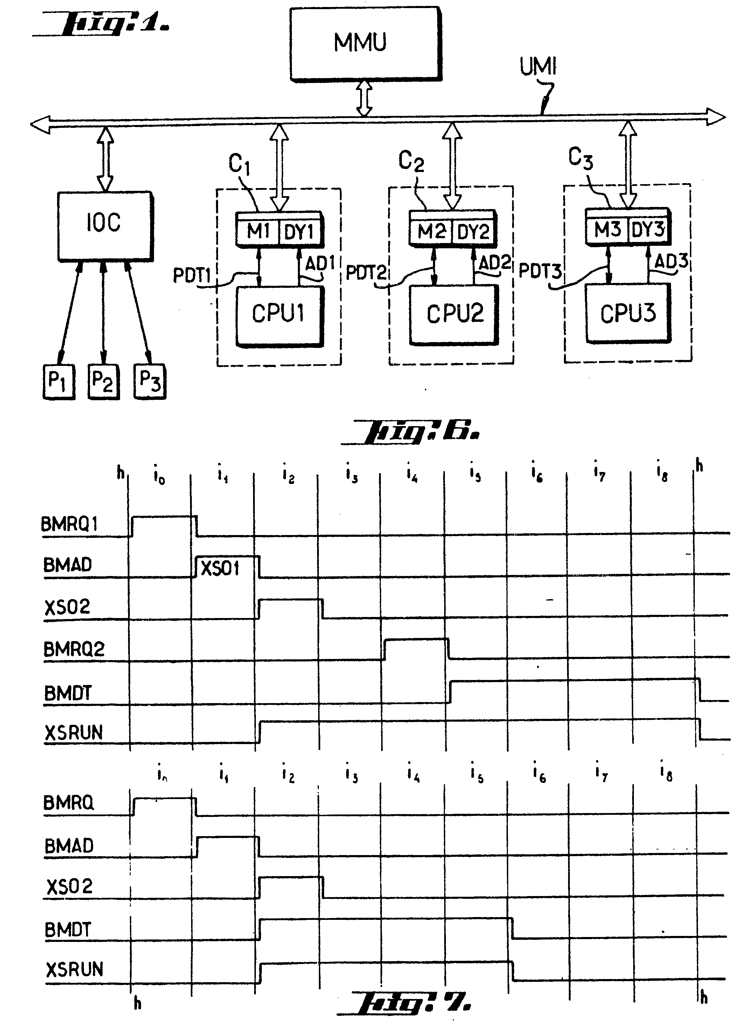

Le système de traitement numérique de l'information représenté sur la fig. 1 et auquel s'applique le procédé conforme à l'invention comprend:

– une unité de mémoire principale MMU,

– plusieurs processeurs CPU1, CPU2 et CPU3 possédant des ressources telles que des caches respectivement C1, C2 et C3, et

– une unité d'entrée-sortie IOC reliée à plusieurs périphériques P1, P2 et P3, ces unités et ces processeurs étant reliés entre eux par un bus principal de liaison UMI.

Comme indiqué précédemment, l'exécution d'une tâche par l'un des processeurs CPU1, CPU2 ou CPU3 se traduit par l'émission de requêtes de demande d'accès à des informations pouvant être contenues:

– dans les ressources du processeur émetteur de la requête, notamment dans son cache comprenant une partie mémoire M et une partie répertoire DY d'identification des informations enregistrées dans la partie mémoire M (parties mémoire M1, M2, M3 et parties répertoire DY1, DY2, DY3 pour les trois processeurs CPU1, CPU2, CPU3 respectivement),

– dans les ressources des autres processeurs, et

– dans l'unité de mémoire principale MMU.

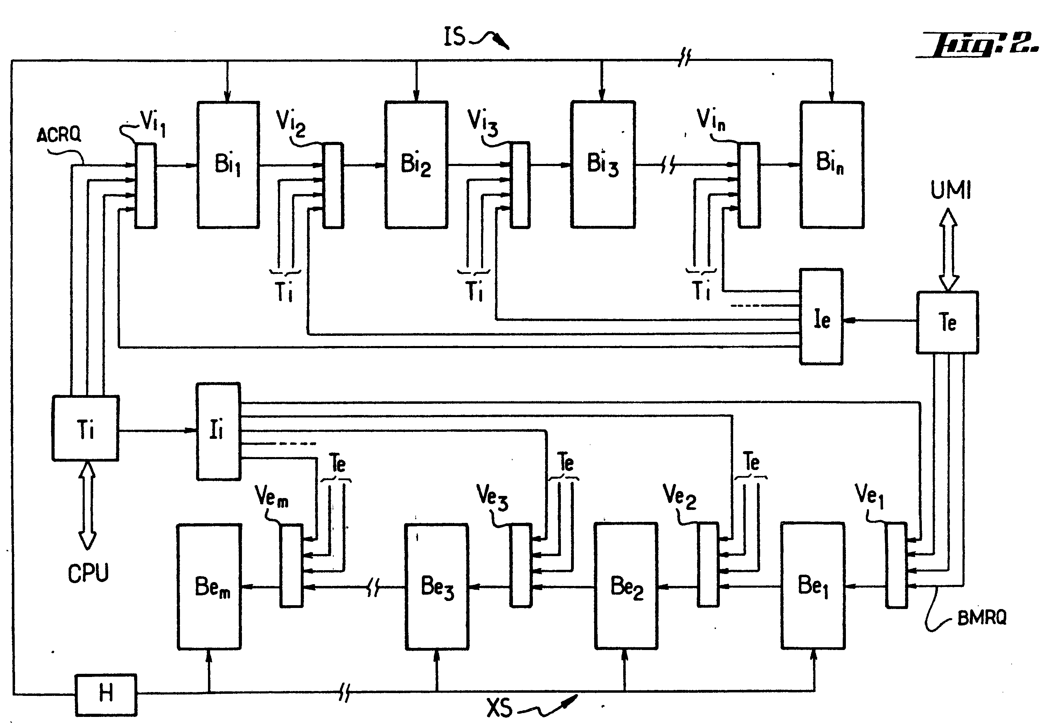

Pour mettre en œuvre le procédé conforme à l'invention visant à améliorer la rapidité d'exécution des tâches exécutées par un même processeur, chaque cache est équipé d'un ensemble de circuits représentés schématiquement sur la fig. 2, à savoir:

— un séquenceur interne IS (premiers moyens) pour assurer la synchronisation des opérations à exécuter par le cache au cours du traitement d'une requête interne,

— un séquenceur externe XS (seconds moyens) pour assurer la synchronisation des opérations exécutées par le cache au cours du traitement d'une requête externe, et

— des circuits de dialogue (le ou troisièmes moyens, li ou quatrièmes moyens) entre ces deux séquenceurs pour permettre le traitement simultané de requêtes respectivement interne et externe par un même cache, ou pour interrompre le fonctionnement soit du séquenceur interne, soit du séquenceur externe dès que deux opérations résultant des traitements de deux requêtes respectivement interne et externe ne peuvent pas être exécutées simultanément.

Chaque séquenceur interne IS comprend essentiellement plusieurs bascules Bi1, Bi2;.., Bin montées en série, chaque bascule recevant des signaux récurrents issus d'une horloge H.

Chaque bascule Bi1, Bi2;.. Bin est associée à un circuit de validation Vi1, Vi2;.. Vin respectivement. Un circuit de validation a pour fonction de valider le basculement de la bascule associée suivant l'état des différentes entrées de ce circuit. Plus précisément, en supposant que le processeur CPU1 émette une requête dénommée ACRQ et considérée comme interne pour son cache C1, cette requête une fois validée, par exemple à la fin du traitement d'une requête interne précédente, met en route le séquenceur interne IS du cache C1 par l'intermédiaire de circuits de commande Ti. Ces circuits Ti ont pour fonction de transmettre aux différents circuits de validation Vi1, Vi2;.., Vin associés respectivement aux bascules Bi1, Bi,.., Bin du séquenceur interne, les conditions de basculement de ces bascules dont l'état autorise ou non, au début de chaque cycle de traitement défini par deux tops successifs émis par l'horloge H, la validation d'une requête interne ou l'opération demandée par une requête interne déjà validée.

Si les conditions envoyées au circuit de validation Vi1 sont satisfaites, ce circuit autorise le basculement de la bascule Bi1 à l'arrivée d'un top de l'horloge H, la bascule changeant à nouveau d'état au top d'horloge suivant. Ce dernier top d'horloge permettra le basculement de la deuxième bascule Bi2 si les conditions de validation présentes aux entrées du circuit de validation Vi2 associé à la bascule Vi2 sont satisfaites et ainsi de suite.

Au cours de chaque cycle de traitement défini par l'horloge H, il est associé une bascule du séquenceur interne IS pour le traitement d'une requête interne. L'état de la bascule associée à un cycle de traitement détermine la validation d'une requête interne ou l'exécution d'une opération d'une requête interne déjà validée. Il est à noter que le changement d'état d'une bascule fait partie des conditions de validation du basculement de la bascule suivante.

De façon analogue, le séquenceur externe XS du cache C1 comprend des bascules Be1, Be2;.. recevant les tops de l'horloge H, et des circuits de commande $T_e$ pour assurer la validation et le traitement d'une requête externe.

Les circuits de dialogue (le, li) entre les deux séquenceurs interne IS et externe XS sont commandés, par exemple, par les circuits de commande Te, Ti respectivement, ces circuits de commande étant respectivement en relation constante avec le bus de liaison UMI et les autres circuits de processeur CPU associé. Les circuits de synchronisation ou de dialogue le (premier circuit de demande d'interruption) a ses sorties qui sont reliées aux différentes entrées des circuits de validation Vi1, Vi2;.., Vin du séquenceur interne IS, afin d'imposer une condition de validation supplémentaire lorsqu'une requête interne doit être retardée ou suspendue. De façon analogue, le circuit de dialogue li commandé par les circuits de commande Ti, a ses sorties reliées aux différentes entrées des circuits de validation Ve1, Ve2;.. Ven du séquenceur externe XS, afin d'imposer une condition de validation supplémentaire pour retarder ou interrompre une requête externe.

Les requêtes internes émises par un processeur et traitées par son cache peuvent concerner (à titre d'exemple):

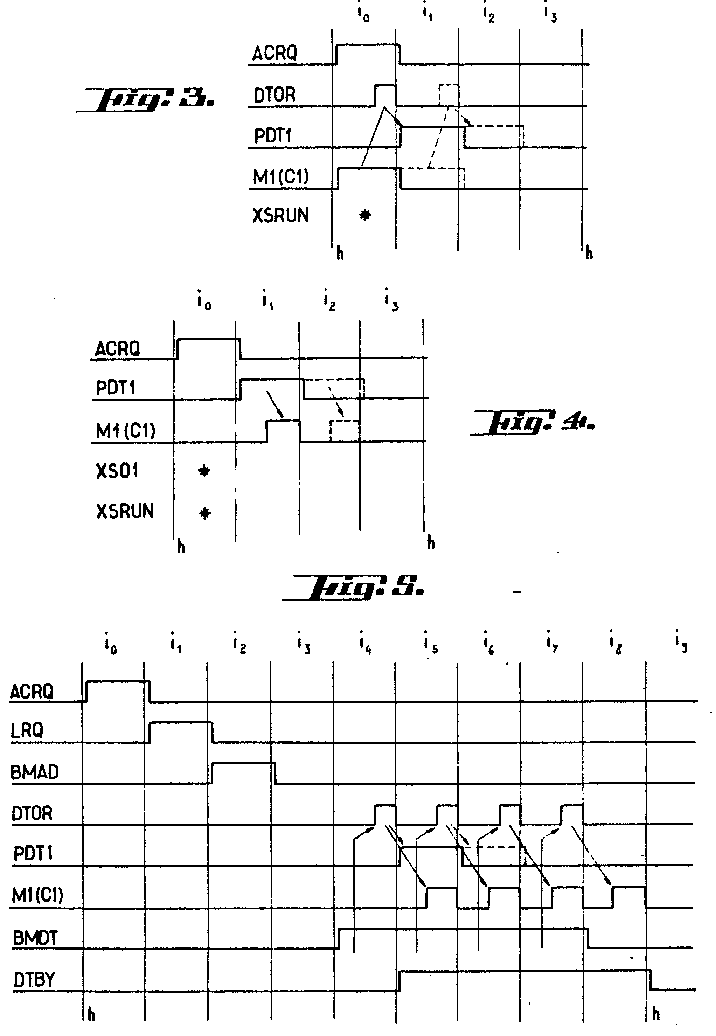

— la lecture d'une information contenue dans le cache du processeur émetteur de la requête interne (fig. 3),

— l'écriture d'une information contenue dans le cache du processeur émetteur de la requête interne (fig. 4), et

— la lecture d'une information non contenue dans le cache du processeur émetteur de la requête interne, c'est-à-dire présente dans le cache d'un autre processeur ou dans l'unité de mémoire principale MMU du système (fig. 5).

Il va être maintenant étudié ces différentes requêtes internes, en sachant que le cache qui doit les traiter peut soit être en train d'exécuter une requête externe, soit recevoir une requête externe pendant le traitement d'une requête interne.

Supposons le cas d'une requête interne concernant une lecture d'une information contenue dans le cache C1 du processeur CPU1 émetteur d'une requête (fig. 3).

Cette requête interne est matérialisée par un signal ACRQ qui prend un niveau haut lorsque la requête interne est validée par des circuits de priorité (non représentés). Le signal ACRQ met en circuit le séquenceur interne IS du cache C1 qui va définir, à partir des tops h de l'horloge H, une succession de cycles de traitement i0, i1..., in.

Le déroulement de la requête interne est le suivant:

— au cycle i0, le cache C1 autorise l'accès simultané à sa partie répertoire DY1 et à sa partie mémoire M1 (fig. 1). La consultation de la partie répertoire DY1 du cache C1 permet de savoir, à partir de l'adresse de l'information que désire lire le processeur CPU1, si cette information est présente dans la partie mémoire M1 du cache C1. Ces deux accès simultanés permettent de gagner du temps si l'information recherchée par le processeur CPU1 est effectivement dans la partie mémoire M1 de son cache C1. Dans l'affirmative, l'information sous la forme d'un mot est transférée de la partie mémoire M1 du cache C1 dans un registre intermédiaire DTOR situé au niveau du cache C1. Cette opération est matérialisée par un signal M1 (C1) ayant un niveau haut représentatif du mot traité et par un signal DTOR ayant un niveau haut indiquant l'utilisation du registre DTOR;

– au cours du cycle i1 suivant, en supposant que tout se déroule normalement, c'est-à-dire que les conditions de validation présentes aux entrées des circuits de validation Vi1 associés au séquenceur interne IS sont satisfaites, rien ne s'oppose au basculement de la bascule Bi1 qui passe, par exemple, à un niveau haut au début du cycle i1. Cet état de la bascule autorise le traitement d'une opération suivante de la requête interne, à savoir: transfert du mot contenu dans le registre DTOR au processeur CPU1 par l'intermédiaire des lignes de données PDT1 reliant le processeur à son cache. Cette opération est matérialisée par un signal PDT1 qui prend un niveau haut pendant le cycle i1.

A la fin du cycle i1, l'opération de lecture est terminée. Cependant, dans le cas de la lecture d'un double mot, ce deuxième mot est lu pendant le cycle i1, transféré dans le registre DTOR alors libre, puis transféré au processeur au cours du cycle suivant i2 après le basculement de la bascule Bi2 autorisé par les circuits de validation Vi2. Le transfert du deuxième mot est matérialisé sur le fig. 3 par des traits pointillés.

Comme cela a été explicité précédemment, l'exécution de cette requête interne ACRQ par le cache C1 peut éventuellement entrer en conflit avec une requête externe dénommée BMRQ émise par un autre processeur du système et s'adressant notamment au cache C1.

Plusieurs cas peuvent se présenter alors:

1) si une demande de traitement d'une requête interne émise par le processeur CPU1 et une demande de traitement d'une requête externe BMRQ émanant d'un autre processeur tel que le processeur CPU2 et s'adressant au cache C1, sont demandées simultanément, seule une de ces requêtes sera validée. Selon l'invention, une demande de requête externe est prioritaire sur une demande de requête interne. Dans ce cas, le signal ACRQ ne passe pas à un niveau haut et la requête interne est en attente. Le processeur CPU1 devra ré-émettre une demande de traitement de requête interne avant d'être validée.

2) si la demande de requête interne ACRQ a effectivement été validée au cours du cycle i0, il va être étudié ci-après l'influence que peut avoir une requête externe au cours des cycles i1 et i2 du traitement de la requête interne ACRQ.

Auparavant, il est souhaitable de se reporter aux figs 6 et 7 qui matérialisent schématiquement le traitement d'une requête externe dans le cas d'une lecture et dans le cas d'une écriture respectivement.

Lorsqu'une requête externe de lecture est validée, elle se décompose en deux requêtes externes BMRQ1 et BMRQ2, ces requêtes sont matérialisées sur la fig 6 par les signaux BMRQ1 et BMRQ2 qui sont à un niveau haut lorsque la requête correspondante est validée.

Lorsqu'un processeur, par exemple le processeur CPU2, désire lire une information qui n'est pas contenue dans son cache C2, il émet une requête qui est considérée par les autres caches comme une requête externe. Dans un premier temps, le processeur CPU2 émet une requête de lecture BMRQ1 qui, une fois validée, déclenche les séquenceurs externes XS des autres caches avec définition des cycles de traitement i0, i1;.. in. Comme pour le séquenceur interne IS de chaque processeur, les différentes bascules Be1, Be2..., Ben des séquenceurs externes XS des processeurs autres que celui qui a émis la requête externe BRMQ1 vont tour à tour basculer dans des conditions normales de fonctionnement pour permettre le traitement de cette requête externe lorsqu'elle sera identifiée par l'un des caches. Bien entendu, les cycles de traitement définis par un séquenceur externe XS d'un cache se superposent aux cycles de traitement du séquenceur interne IS du même cache, si ces deux séquenceurs sont amenés à fonctionner simultanément (l'horloge H à partir de laquelle sont définis ces cycles est commune aux deux séquenceurs d'un même cache).

En se reportant à nouveau à la fig. 6 et en supposant que la requête externe de lecture BMRQ1 est validée au cours du cycle de traitement i0, le cycle i1 suivant permet aux caches, auxquels s'adresse cette requête externe, d'analyser cette requête pour en déterminer sa nature et recevoir l'adresse de l'information à laquelle désire accéder le processeur CPU2 émetteur de la requête externe par exemple. Cette opération est matérialisée par un signal BMAD qui indique, lorsqu'il est à un niveau haut, que les lignes d'adresse du bus de liaison UMI sont utilisées par le processeur CPU2. Ce signal BMAD correspond en fait à l'émission par chaque séquenceur externe XS des autres caches recevant cette requête externe, d'un signal XS01 émis par le circuit de dialogue le en direction des différents circuits de validation Vi1, Vi2;.., Vin de chaque séquenceur interne IS associé.

La présence du signal XS01 au cours du cycle i1 signifie que la bascule Be1 des séquenceurs externes XS des caches recevant la requête externe a basculé. A la fin du cycle i1, les bascules Be2 de ces caches basculent à leur tour dans les conditions normales de fonctionnement, c'est-à-dire que les conditions de validation présentes aux entrées des différents circuits de validation Ve2 associés aux bascules Be2 sont satisfaites. Au cours de ce cycle i2, le processeur CPU2, émetteur de la requête externe, provoque la lecture des parties répertoire des caches des autres processeurs du système. Cette opération est matérialisée sur la fig. 6 par un signal XS02 qui est à un niveau haut pendant le cycle i2. Il est important de noter également qu'au cours de ce cycle i2, chaque circuit de synchronisation ou de dialogue Ie des différents caches recevant la requête externe, envoie un signal XSRUN à l'ensemble des circuits de validation Vi1, Vi2;.., Vin du séquenceur interne IS associé. La fonction de ce signal XSRUN sera explicitée plus loin.

A la fin du cycle i2, l'un des caches va se trouver effectivement concerné par la requête externe, c'est-à-dire qu'il contient l'information recherchée par le processeur CPU2 émetteur de cette requête. Dans le cas contraire, l'information recherchée par le processeur CPU2 sera lue dans l'unité de mémoire principale MMU du système. Pour la suite, on supposera que l'information recherchée est contenue dans le cache du processeur CPU1. Dans ces conditions, le cache C1 doit indiquer au processeur CPU2 qu'il contient l'information recherchée et qu'il est prêt à lui transmettre par l'intermédiaire des lignes de données du bus de liaison UMI. Pour cela, le cache C1 va émettre une requête de réponse qui, lorsqu'elle est validée, est matérialisée par un signal BMRQ2 ayant un niveau haut. Pour que cette requête de réponse BMRQ2 soit validée, il faut que les lignes de données du bus de liaison UMI soient disponibles. Cette validation peut par exemple intervenir au cours du cycle i4. Dès cet instant, le cache C1 peut transmettre l'information demandée par le processeur CPU2. En même temps que la validation de la requête de réponse BMRQ2 au cours du cycle i4, le premier mot de l'information à lire est transféré dans un registre intermédiaire du cache avant d'être envoyé sur les lignes de données BMDT du bus de liaison UMI au cours du cycle i5. Dans le cas représenté, l'information à transmettre se compose de quatre mots, ce qui nécessite l'utilisation des lignes de données du bus de liaison jusqu'au cycle i8. Il est à noter que dans les meilleures conditions de fonctionnement, la requête réponse BMRQ2 peut intervenir dès le cycle i3.

En se reportant à la fig. 7, la requête externe BMRQ considérée est cette fois-ci une requête d'écriture. Une fois cette requête validée et matérialisée par le signal BMRQ ayant un niveau haut, les séquenceurs externes XS des caches recevant cette requête externe sont mis en route, comme dans le cas du traitement de la requête externe de lecture précédente. Au cours du cycle i0 où apparaît le signal de validation BMRQ, le processeur émetteur de la requête externe envoie l'adresse de l'information à laquelle il veut accéder, adresse qui est envoyée à tous les caches par l'intermédiaire des lignes d'adresse BMAD du bus de liaison UMI. Cette opération est matérialisée par le signal BMAD qui indique, lorsqu'il est à un niveau haut, que les lignes d'adresse du bus de liaison UMI sont utilisées par le processeur émetteur de la requête externe. Ce signal BMAD correspond en fait à l'émission par le séquenceur externe XS des caches recevant l'adresse de l'information recherchée, d'un signal XS01 émis par le circuit de synchronisation ou de dialogue le en direction des différents circuits de validation Vi1, Vi2;.. Vin du séquenceur interne IS associé.

La présence de ce signal XS01 a la même signification que dans le cas d'une requête externe de lecture. Au cycle i2, il est effectué la lecture des parties répertoire des caches qui ont reçu la requête externe. Cette opération est matérialisée sur la fig. 7 par un signal XS02 qui a un niveau haut pendant le cycle i2. Il est important de noter également qu'au cours de ce cycle i2, le circuit de synchronisation ou de dialogue le des caches qui ont reçu la requête externe, envoie un signal XSRUN à l'ensemble des circuits de validation Vi1, Vi2;.. Vin du séquenceur interne IS associé. La fonction du signal XSRUN sera explicitée plus loin. Il est à noter également qu'au cours du cycle i2, la première donnée ou premier mot que désire écrire le processeur émetteur de la requête externe est reçu dans un registre intermédiaire de chaque cache des autres processeurs. Cette opération est effectuée en utilisant les lignes de données BMDT du bus de liaison UMI.

A la fin du cycle i2, c'est-à-dire après la lecture des parties répertoire des caches permettant d'identifier la présence de l'information à laquelle le processeur émetteur de la requête externe désire accéder, on connaît celui des caches qui contient cette information recherchée. Si cela n'est pas le cas, l'opération d'écriture s'effectue dans l'unité de mémoire principale MMU. Par la suite, on suppose que l'information recherchée est contenue dans l'un des caches.

Si le traitement de la requête externe s'effectue dans des conditions normales, cela signifie que les différentes bascules du séquenceur externe XS du cache traitant cette requête externe sont amenées à basculer l'une après l'autre si les différentes conditions de validation de basculement des bascules sont satisfaites. Ainsi, au cours des cycles i2 à i5, les lignes de données BMDT du bus de liaison UMI vont être utilisées pour transférer, dans l'exemple représenté, quatre mots à raison d'un mot par cycle. Chacun de ces mots est écrit dans la partie mémoire du cache concerné à l'adresse donnée par le processeur émetteur de la requête externe. Comme chaque mot venant des lignes de données BMDT du bus de liaison UMI est stocké dans un registre intermédiaire avant d'être écrit au cycle suivant dans la partie mémoire du cache concerné par cette requête externe, l'opération d'écriture se termine au cycle i6.

Après ces explications, il est possible d'expliquer ce qui se passe lorsqu'une requête externe émise par exemple par le processeur CPU2 est validée et s'adresse au cache C1 qui est en train de traiter une requête interne de lecture.

En se reportant à nouveau à la fig. 3, une requête externe BMRQ de lecture ou d'écriture peut apparaître dès le cycle i1 et être validée (présence du signal BMRQ) par le système qui lui donnera accès aux lignes d'adresse du bus de liaison UMI au cycle i2 (signal XS01 qui suit le signal BMRQ), que cette requête externe soit une requête de lecture ou d'écriture. Au cycle i2, le cache a soit terminé l'opération de lecture dans le cas d'un mot ou assure le transfert du deuxième mot à lire du registre intermédiaire DTOR au processeur CPU1. Il n'y a pas de conflit entre ces requêtes et leurs traitements peuvent se recouvrir pendant le cycle i1, cycle où les deux séquenceurs IS et XS du cache C1 n'ont en fait aucun dialogue entre eux.

3) Enfin, une requête externe BMRQ peut être en cours de traitement, quand une requête interne de lecture ACRQ demande à être prise en compte par le cache C1.

La requête interne de lecture ACRQ (fig. 3) peut être validée dès le cycle i1 de traitement en cours d'une requête externe de lecture (fig. 6) ou d'une requête externe d'écriture (Fig. 7). En effet, au cours de ce cycle i1 (présence du signal XS01), les requêtes externes de lecture et d'écriture sont en possession des lignes d'adresse du bus de liaison UMI, alors qu'au cours de ce cycle i1 (correspondant au cycle i0 de la fig. 3), on consulte la partie répertoire DY1 du cache C1 et on lit un mot ou un premier mot dans la partie mémoire M1 du cache C1. Il n'y a donc pas de conflit entre le traitement simultané de ces requêtes qui ne travaillent pas sur les mêmes ressources du processeur CPU1.

Au cycle suivant (cycle i2 pour la requête externe et cycle i1 pour la requête interne), il n'y a également pas de conflit. En effet:

— au cycle i2 (présence du signal XS02) on lit la partie répertoire DY1 du cache C1 pour une requête externe de lecture, on lit également la partie répertoire DY1 du cache C1 pour une requête externe d'écriture, et le cache C1 reçoit dans un registre intermédiaire le premier mot transmis par les lignes de données BMDT du bus de liaison UMI, et

— au cycle i1 de la requête interne de lecture, le premier mot lu de la partie mémoire M1 du cache C1 est transféré du registre intermédiaire DTOR au processeur CPU1 (présence du signal PDT1), et éventuellement le deuxième mot lu de la mémoire M1 du cache C1 est transféré dans le registre intermédiaire DTOR à la fin du cycle i1.

Au cycle i2 d'une requête externe de lecture ou d'écriture (figs 6, 7), il est important de noter la présence du signal XSRUN qui a la signification suivante: interdire à toute requête interne l'accès à la partie répertoire et à la partie mémoire d'un cache, tant qu'une requête externe peut les utiliser au cours de son traitement.

Un signal XSRUN est émis par le circuit de demande d'interruption Ie (troisièmes moyens) du séquenceur externe XS. Ce signal est envoyé aux circuits de validation Vi1, Vi2;.. Vin du séquenceur interne IS associé et peut en interrompre le fonctionnement, c'est-à-dire interrompre le traitement en cours d'une requête interne ou interdire la validation d'une requête interne.

En se reportant à la fig. 4, il va être décrit le traitement d'une requête interne d'écriture demandée par le processeur CPU1, écriture qui s'effectue dans son cache C1. Lorsque la requête interne ACRQ est validée (cycle i0) le processeur CPU1 envoie l'adresse de l'information à laquelle il désire accéder en utilisant les lignes d'adresse AD1 reliant le processeur à son cache pour consulter la partie répertoire DY1 du cache C1 et savoir ainsi s'il contient l'information recherchée. Dans l'affirmative, au cycle i1 suivant, le processeur CPU1 envoie un mot dans la partie mémoire M1 du cache C1 en utilisant les lignes de données PDT1 reliant le processeur CPU1 au cache C1, et envoie éventuellement un deuxième mot au cours du cycle suivant i2.

Pour les raisons explicitées précédemment, la requête interne ACRQ ne peut être validée au cycle i0 que si les signaux XS02 et XSRUN concernant le traitement éventuellement en cours d'une requête externe par le cache C1 sont absents pour éviter un conflit d'accès simultané à la partie mémoire M1 du cache C1 notamment dans le cas de l'écriture d'un deuxième mot au cours du traitement de la requête interne. Si ces conditions ne sont pas satisfaites, le traitement de la requête interne ACRQ est retardé.

Par contre, si la requête interne ACRQ est validée au cours du cycle i0, le signal XS01 associé au traitement d'une requête externe peut apparaître au cycle i1 de traitement de la requête interne qui utilise la partie mémoire M1 du cache C1, alors que le traitement de la requête externe concerne l'envoi par les lignes d'adresse BMAD du bus de liaison UMI, de l'adresse de l'information à laquelle demande d'accéder le processeur émetteur de la requête externe. Au cycle i2 suivant, le traitement de la requête interne peut concerner la transmission d'un deuxième mot dans la partie mémoire M1 du cache C1, alors que le traitement de la requête externe d'écriture ou de lecture concerne la partie répertoire DY1 du cache C1 (signal XS02) ou une adresse (signal BMAD). Dans ce cas, il y a donc recouvrement entre le traitement d'une requête externe et d'une requête interne.

En se reportant à la fig. 5, il va être décrit le traitement d'une requête interne de lecture effectué par le cache C1 mais qui ne possède pas l'information recherchée.

La requête interne ACRQ est validée (cycle i0), avec consultation de la partie répertoire DY1 du cache C1 qui indique à la fin du cycle i0 que l'information recherchée ne se trouve pas dans le cache. Au cycle i1, le cache émet une demande d'accès au bus de liaison UMI pour interroger le reste du système. Lorsque cette demande d'accès est validée (signal LRQ ayant un niveau haut) par exemple dès le cycle i1, le cache C1 envoie l'adresse de l'information qu'il recherche pendant le cycle i2. Le cache C1 est alors en attente et peut éventuellement traiter toute requête externe le concernant. On suppose que le cache C1 reçoit au cycle i4 la réponse de l'unité qui possède l'information qu'il recherche. Dans ces conditions, au cycle i4, les lignes de données BMDT du bus de liaison UMI (signal BMDT à un niveau haut) sont utilisées pour transmettre l'information au cache C1. Simultanément à la réception d'un mot de l'information (un mot par cycle), ce mot est rangé dans un registre intermédiaire DTOR du cache récepteur C1 (signal DTOR à un niveau haut). Au cycle suivant i5 le registre DTOR est vidé pour envoyer son contenu à la partie mémoire M1 du cache C1 (signal M1 (C1) à un niveau haut). Simultanément, le contenu du registre est également envoyé aux circuits de traitement de processeur CPU1 par l'intermédiaire des lignes de données PDT1 (signal PDT à un niveau haut). Cette opération de lecture se termine au cycle i8.

Au cycle i4, c'est-à-dire lorsque le cache C1 reçoit la réponse de l'unité qui contient l'information qu'il recherche, une requête externe ne peut pas être validée puisque la requête réponse de l'unité possédant l'information est elle-même prise en compte. Dans ce cas, une demande de requête externe est en attente.

Par contre, une demande de requête externe de lecture peut être validée au cours du cycle i5. En effet, en se reportant à la fig. 6, le signal XSRUN intervient deux cycles après le cycle où est validée la requête. Dans ces conditions, l'apparition d'une requête externe de lecture pendant le cycle i5 de traitement de la requête interne représenté sur la fig. 5, donne lieu à l'apparition du signal XSRUN au cycle i7, ce qui ne perturbe pas le déroulement de la requête interne étant donné que ces deux requêtes font appel à des ressources différentes du cache C1 du processeur CPU1. Au cours du cycle i6 de traitement de la requête externe de lecture, on peut accéder sans problème aux lignes d'adresse du bus de liaison UMI, puisque la requête interne n'utilise en fait à ce moment que les lignes données BMDT de ce bus de liaison. Il y a donc recouvrement entre les traitements des deux requêtes sans conflit.

Par contre, si une requête externe d'écriture est validée au cycle de traitement i5 de la requête interne, la requête externe pourra utiliser les lignes d'adresse BMAD du bus de liaison UMI pendant le cycle i6, puis son traitement sera interrompu à partir de ce cycle car la requête interne utilise alors la partie mémoire M1 du cache C1. Cette interruption du traitement de la requête externe se traduit par le signal DTBY (fig. 5) qui est émis cette fois-ci par le séquenceur interne IS du cache C1 pour interrompre le fonctionnement du séquenceur externe XS associé afin de lui interdire l'accès à la partie mémoire M1 du cache C1. De cette façon, on évite un conflit entre les traitements des requêtes.

Il est donc important de noter qu'une requête interne en cours de traitement peut interdire la validation d'une requête externe ou interrompre le traitement d'une requête externe. Dans les exemples illustrés, il a été considéré que deux requêtes respectivement interne et externe ne peuvent pas accéder simultanément aux mêmes ressources d'un processeur, ces ressources ayant été limitées à la partie mémoire et la partie répertoire du cache. Bien entendu, on peut augmenter le nombre des ressources auxquelles deux requêtes ne peuvent pas accéder simultanément.

Il est à noter également que la présence du signal XSRUN au cours du traitement d'une requête externe, n'empêche pas le processeur concerné d'émettre des requêtes internes et à son cache de recevoir des réponses des autres unités, ces réponses étant examinées par des circuits de priorité avant d'être validées.

Enfin, dans les exemples illustrés, il faut remarquer que le signal XSRUN émis au cours du traitement d'une requête externe interdit à une requête interne, au cours du cycle où ce signal est émis, l'accès à la partie répertoire d'un cache, et lui interdit l'accès à la partie mémoire du cache au cycle suivant. Cela est toujours compatible avec le fait que ces deux requêtes ne pourront pas avoir un accès simultané, au cours d'un même cycle, soit à la partie répertoire du cache, soit à la partie mémoire du cache.

**Revendications**

1. Procédé pour gérer les conflits posés par des accès multiples à un même cache d'un système de traitement numérique de l'information comprenant au moins: une unité de mémoire principale (MMU), deux processeurs (CPU1; CPU2) possédant chacun des ressources propres telles qu'un cache (C1; C2) avec une partie mémoire (M1; M2) et une partie répertoire (DY1, DY2) d'identification des informations contenues dans ladite partie mémoire, une unité d'entrée-sortie (IOC), un bus principal de liaison (UMI) reliant ces différents éléments du système; le traitement d'une tâche par un processeur consistant:

— à émettre au moins une requête (ACRQ) pour accéder à au moins une information présente soit dans le cache du processeur ou d'un autre processeur, soit dans l'unité de mémoire (MMU) du système,

— à faire valider cette requête par son cache qui considère cette requête comme interne (ACRQ), et

— à faire exécuter ensuite cette requête interne (ACRQ) par ledit cache,

ce cache pouvant recevoir une requête (BMRQ) dénommée externe émise par un autre processeur du système traitant une autre tâche et demandant l'accès par l'intermédiaire du bus de liaison (UMI),

le procédé est du type consistant à traiter une succession d'opérations de lecture et d'écriture au cours d'une succession de cycles ($i_o;..,~i_n$), lancés à l'apparition d'une requête interne (ACRQ) validée ou d'une requête externe (BMRQ) validée, en donnant priorité à la validation d'une requête externe (BMRQ) sur une requête interne (ACRQ) lorsque ces requêtes demandent à être prises en compte simultanément par un même cache dans un premier cycle ($i_o$), et en autorisant le traitement simultané de ces requêtes au cours des cycles suivants ($i_1;..~i_n$) si elles font appel à des ressources différentes du cache du processeur, caractérisé en ce qu'il consiste:

– à lancer une séquence de cycles ($i_o$;.. $i_n$) pour chaque requête interne validée et une séquence de cycles pour chaque requête externe validée,

– à retarder le premier cycle ($i_o$) d'une requête interne de lecture, si une requête externe travaille sur la partie répertoire ou la partie mémoire du cache du processeur (signal XSRUN),

– à retarder le premier cycle ($i_o$) d'une requête interne d'écriture, si une requête externe travaille déjà sur la partie mémoire ou la partie répertoire du cache du processeur, ou va travailler sur la partie mémoire ou la partie répertoire du cache dans le cycle de traitement suivant (signal XSRUN),

– à retarder le premier cycle ($i_o$) d'une nouvelle requête externe ou à interrompre au début d'un cycle l'opération de traitement d'une requête externe d'écriture, si la nature de l'opération demandée alors par le traitement d'une requête interne en cours est une opération de transfert de données sur le bus de liaison (UMI) entre le cache du processeur émetteur de la requête interne et l'unité de mémoire principale (MMU) du système (signal DTBY).

2. Dispositif pour la mise en œuvre du procédé tel que défini selon la revendication 1, dans un système comprenant au moins: une unité de mémoire principale (MMU), deux processeurs (CPU1, CPU2) dont chacun possède des ressources propres telles qu'un cache (C1; C2) ayant une partie mémoire (M1; M2) et une partie répertoire (DY1; DY2) d'identification des informations contenues dans ladite partie mémoire, caractérisé en ce que chaque cache (CPU1; CPU2) du système comprend:

– une horloge (H) qui émet des tops d'horloge récurrents définissant une succession de cycles,

– un premier séquenceur (IS) recevant lesdits tops d'horloge pour générer une première séquence de cycles ($i_o$;.. $i_n$) et assurer le traitement d'une requête interne émise par le processeur associé à ce cache, et comprenant une série de bascules (Bil;.. Bin) montées en série, un circuit de validation (Vil;.. Vin) associé à chaque bascule pour valider l'ordre de basculement de ladite bascule associée, des circuits de commande (Ti) dénommés internes dont les sorties sont reliées à chacun desdits circuits de validation (Vil.... Vin) pour déterminer les conditions de basculement de chaque bascule en fonction de l'opération à traiter par le cache,

– un second séquenceur (XS) recevant lesdits tops d'horloge pour générer une seconde séquence de cycles ($i_o$;.. $i_n$) et assurer le traitement d'une requête externe émise par un autre processeur du système, et comprenant une série de bascules (Bel,... Bem) montées en série, un circuit de validation (Vel;.. Vem) associé à chaque bascule pour valider l'ordre de basculement de ladite bascule associée, des circuits de commande (Te) dénommés externes dont les sorties sont reliées à chacun desdits circuits de validation (Vel;.. Vem) pour déterminer les conditions de basculement de chaque bascule en fonction de l'opération à traiter par le cache,

– un premier circuit de dialogue ($I_e$) dont les sorties sont reliées à l'entrée des circuits de validation (Vi₁;.. Viₙ) pour retarder le basculement des bascules du premier séquenceur (IS) en fonction de l'opération traitée par le second séquenceur (XS), et

– un second circuit de dialogue ($I_i$) dont les sorties sont reliées à l'entrée des circuits de validation (Ve₁;.. Veₘ) pour retarder le basculement des bascules du second séquenceur (XS) en fonction de l'opération traitée par le premier séquenceur (IS).

**Claims**

1. Method of managing the conflicts raised by multiple accesses to one and the same cache memory of a digital data processing system, comprising at least: one principal memory unit (MMU), two processors (CPU1; CPU2) of which each has its own resources such as a cache memory (C1; C2) comprising a storage section (M1; M2) and a directory section (DY1, DY2) for identification of the data contained in the said storage section, an input-output unit (1OC), a principal connection bus (UMI) coupling these different elements of the system; the handling of a task by a processor consisting:

– in transmitting at least one request (ACRQ) for access to at least one datum present either in the cache memory of the processor or of another processor, or in the storage unit (MMU) of the system,

– in having this request validated by its cache memory which classifies this request as an internal one (ACRQ), and

– in subsequently having this internal request (ACRQ) executed by the said cache memory, this cache memory being able to receive a so-called external request (BMRQ) transmitted by another processor of the system handling another task and requesting access via the connection bus (UMI),

– the method being of the kind consisting in processing a succession of read and write operations during a succession of cycles ($i_o$;.. $i_n$) initiated at the advent of a validated internal request (ACRQ) or of a validated external request (BMRQ), whilst giving priority to the validation of an external request (BMRQ) over an internal request (ACRQ) when these requests require to be considered simultaneously by one and the same cache memory during a first cycle, and whilst authorising the simultaneous processing of these requests during the following cycles ($i_1$;.. $i_n$) if they call on different resources of the cache memory of the processor, characterised in that it consists:

– in initiating a sequence of cycles ($i_o$;.. $i_n$) for each validated internal request and a sequence of cycles for each validated external request,

– in delaying the first cycle ($i_o$) of an internal read request, if an external request is operative on the directory section or the storage section of the cache memory of the processor (signal XSRUN),

– in delaying the first cycle ($i_o$) of an internal write request, if an external request is already operative on the storage section or the directory section of the cache memory of the processor, or will be operating on the storage section or the directory section of the cache memory during the next processing cycle (signal XSRUN),

– in delaying the first cycle ($i_o$) of another external request or in interrupting the processing operation of an external write request at the beginning of a cycle, if the nature of the operation then required by the processing of an internal request in progress is a data transfer operation on the connection bus (UMI) between the cache memory of the precessor transmitting the internal request and the principal memory unit (MMU) of the system (signal DTBY).

2. Device for carrying out the method as defined according to claim 1, within a system comprising at least: one principal memory unit (MMU), two processors (CPU1; CPU2) each of which has its own resources such as a cache memory (C1; C2) comprising a storage section (M1; M2) and a directory section (DY1; DY2) for identification of the data contained in the said storage section, characterised in that each cache memory (CPU1, CPU2) of the system comprises:

– a clock (H) which transmits recurrent clock pulses defining a succession of cycles,

– a first sequencer (IS) receiving the said clock pulses in order to generate a first sequence of cycles ($i_o;.. i_n$) and assure the processing of an internal request transmitted by the processor associated with this cache memory, and comprising a series of trigger circuits (Bil;.. Bin) connected in series, a validation circuit (Vil;.. Vin) associated with each trigger circuit in order to validate the order for the triggering of the said associated trigger circuit, control circuits (Ti) denoted as internal of which the outputs are connected to each of the said validation circuits (Vil;.. Vin) in order to determine the triggering conditions of each trigger circuit as a function of the operation to be processed by the cache memory,

– a second sequencer (XS) receiving the said clock pulses in order to generate a second sequence of cycles ($i_o;.. i_n$) and assure the processing of an external request transmitted by another processor of the system, and comprising a series of trigger circuits (Bel;.. Bem) connected in series, a validation circuit (Vel;.. Vem) associated with each trigger circuit in order to validate the order for the triggering of the said associated trigger circuit, control circuits (Te) denoted as external, of which the outputs are connected to each of the said validation circuits (Vel;.. Vem) in order to determine the triggering conditions of each trigger circuit as a function of the operation to be processed by the cache memory,

– a first dialog circuit ($I_e$) of which the outputs are connected to the inputs of the validation circuits (Vil;.. Vin) in order to delay the triggering of the trigger circuits of the first sequencer (IS) as a function of the operation processed by the second sequencer (XS), and

– a second dialog circuit ($I_i$) of which the outputs are connected to the inputs of the validation circuits (Vel;.. Vem) in order to delay the triggering over of the trigger circuits of the second sequencer (XS) as a function of the operation processed by the first sequencer (IS).

**Patentansprüche**

1. Verfahren zur Verwaltung von Konflikten, die durch Mehrfachzugriffe auf denselben Zwischenspeicher eines digitalen Datenverarbeitungssystems entstehen, das wenigstens enthält: Eine Hauptspeichereinheit (MMU), zwei Prozessoren (CPU1; CPU2), die jeweils über eigene Quellen wie einen Zwischenspeicher (C1; C2) mit einem Speicherteil (M1; M2) und einem Verzeichnisteil (DY1; DY2) zum Identifizieren der in diesem Speicherteil enthaltenen Informationen verfügen, eine Ein/Ausgabe-Einheit (IOC), eine Hauptbusleitung (UMI), welche diese verschiedenen Elemente des Systems verbindet; wobei die Verarbeitung einer Aufgabe durch einen Prozessor darin besteht, dass:

– wenigstens eine Aufforderung (ACRQ) für den Zugriff auf wenigstens eine Information abgegeben wird, die entweder in dem Zwischenspeider des Prozessors oder eines anderen Prozessors oder aber in der Speichereinheit (MMU) des Systems enthalten ist,

– diese Aufforderung durch den zugehörigen Zwischenspeicher freigegeben wird, der diese Aufforderung als intern (ACRQ) auffasst, und

– anschliessend diese interne Aufforderung (ACRQ) durch den genannten Zwischenspeicher ausgeführt wird,

wobei dieser Zwischenspeicher eine als extern bezeichnete Aufforderung (BMRQ) empfangen kann, die von einem anderen Prozessor des Systems abgegeben wird, welcher eine andere Aufgabe bearbeitet und den Zugriff über die Busleitung (UMI) anfordert,

wobei das Verfahren solcher Art ist, dass eine Folge von Leseoperationen und Schreiboperationen im Verlauf einer Aufeinanderfolge von Zyklen ($i_o;.. i_n$) bearbeitet werden, die beim Erscheinen einer freigegebenen internen Aufforderung (ACRQ) oder einer freigegebenen externen Aufforderung (BMRQ) ausgelöst werden, wobei die Freigabe einer externen Aufforderung (BMRQ) Vorrang gegenüber einer internen Aufforderung (ACRQ) erhält, wenn diese Aufforderungen gleichzeitig durch denselben Zwischenspeicher in einem ersten Zyklus ($i_o$) berücksichtigt werden sollen, und wobei die gleichzeitige Verarbeitung dieser Aufforderungen im Verlauf der darauffolgenden Zyklen ($i_1;.. i_n$) zugelassen wird, wenn sie auf verschiedene Quellen des Zwischenspeichers des Prozessors gerichtet sind, dadurch gekennzeichnet, dass es darin besteht, dass:

– eine Zyklensequenz ($i_o;.. i_n$) für jede freigegebene interne Aufforderung und eine Zyklensequenz für jede externe freigegebene Aufforderung ausgelöst werden,

– der erste Zyklus ($i_o$) einer internen Leseaufforderung verzögert wird, wenn eine externe Aufforderung im Verzeichnisteil oder Speicherteil des Zwischenspeichers des Prozessors wirksam ist (Signal XSRUN),

– der erste Zyklus ($i_o$) einer internen Schreibaufforderung verzögert wird, wenn eine externe Aufforderung bereits in dem Speicherteil oder Verzeichnisteil des Zwischenspeichers des Prozessors wirksam ist oder in dem Speicherteil oder Verzeichnisteil des Zwischenspeichers in dem darauffolgenden Verarbeitungszyklus wirksam ist (Signal XSRUN),

– der erste Zyklus ($i_o$) einer neuen externen Aufforderung verzögert wird oder am Anfang eines Zyklus die Operation der Verarbeitung einer externen Schreibaufforderung unterbrochen wird, wenn die Art der dann durch die Verarbeitung einer gerade ablaufenden internen Aufforderung verlangten Operation eine Datenüberführungsoperation über die Busleitung (UMI) zwischen dem Zwischenspeicher des die interne Aufforderung abgebenden Prozessors und der Hauptspeichereinheit (MMU) des Systems ist (Signal DTBY).

2. Vorrichtung zur Durchführung des Verfahrens nach Anspruch 1, in einem System, das wenigstens enthält: Eine Hauptspeichereinheit (MMU), zwei Prozessoren (CPU1; CPU2), von denen jeder über eigene Quellen wie einen Zwischenspeicher (C1; C2) mit einem Speicherteil (M1; M2) und einem Verzeichnisteil (DY1; DY2) zur Identifizierung der in dem Speicherteil enthaltenen Informationen verfügt, dadurch gekennzeichnet, dass jeder Zwischenspeicher (CPU1; CPU2) des Systems enthält:

– einen Taktgeber (H), der eine Folge von Taktimpulsen abgibt, welche eine Aufeinanderfolge von Zyklen bestimmen,

– eine erste Sequenzsteuerung (IS), welche die genannten Taktsignale empfängt, um eine erste Zyklensequenz ($i_o$;.. $i_n$) zu erzeugen und die Verarbeitung einer internen, durch einen diesem Zwischenspeicher zugeordneten Prozessor abgegebenen Aufforderung zu gewährleisten, und mit einer Reihe von Kippschaltungen (Bil;.. Bin), die in Serie geschaltet sind, einer Freigabeschaltung (Vil.;.. Vin), die jeder Kippschaltung zugeordnet ist, um den Kippbefehl der zugeordneten Kippschaltung freizugeben, als intern bezeichnete Steuerschaltungen (Ti), deren Ausgänge mit jeder der Freigabeschaltungen (Vil;.. Vin) verbunden sind, um die Kippbedingungen jeder Kippschaltung in Abhängigkeit von der durch den Zwischenspeicher auszuführenden Operation zu bestimmen,

– eine zweite Sequenzsteuerung (XS), welche die genannten Taktimpulse empfängt, um eine zweite Zyklensequenz ($i_o$,... $i_n$) zu erzeugen und die Verarbeitung einer von einem anderen Prozessor des Systems abgegebenen externen Aufforderung zu gewährleisten, mit einer Reihe von in Serie geschalteten Schaltungen (Bel,.. Bem), einer jeder Kippschaltung zugeordneten Freigabeschaltung (Vel,.. Vem) zur Freigabe des Kippbefehls der genannten zugeordneten Kippschaltung, als extern bezeichnete Steuerschaltungen (Te), deren Ausgänge mit jeder der Freigabeschaltungen (Vel,... Vem) verbunden sind, um die Kippbedingungen für jede Kippschaltung in Abhängigkeit von der durch den Zwischenspeicher auszuführenden Operation zu bestimmen,

– eine erste Dialogschaltung ($I_e$), deren Ausgänge mit dem Eingang der Freigabeschaltungen ($Vi_1$;.. $Vi_n$) verbunden sind, um das Kippen der Kippschaltungen der ersten Sequenzsteuerung (IS) in Abhängigkeit von der durch die zweite Sequenzsteuerung (XS) verarbeiteten Operation zu verzögern, und

– eine zweite Dialogschaltung ($I_i$), deren Ausgänge mit einem Eingang der Freigabeschaltungen ($Ve_1$;.. $Ve_m$) verbunden sind, um das Kippen der Kippschaltungen der zweiten Sequenzsteuerung (XS) in Abhängigkeit von der durch die erste Sequenzsteuerung (IS) verarbeiteten Operation zu verzögern.

0 032 863

# Fig. 1.

# Fig. 6.

# Fig. 7.

*Fig. 2.*

0 032 863

Fig. 3.

Fig. 4.

Fig. 5.

17